# EUROPEAN PATENT APPLICATION

(11) **EP 2 295 242 A1**
(43) Date of publication of application: **16.03.2011**
(21) Application number: 09425347.3
(22) Date of filing: 09.09.2009
(51) Int. Cl.: B32B 27/08, B32B 27/40, B32B 5/18, B32B 37/02, B44C 1/10

(54) **Coating membrane for furnishing elements**

(71) Applicant: Ferrari S.a.s. di Iannone E., 25020 Bassano Bresciano (BS) (IT)
(72) Inventor: Iannone, Raffaele, 25080 Padenghe Sul Garda (Brescia) (IT)
(74) Representative: Lunati & Mazzoni S.r.L.

(57) **Abstract**

A membrane (1) is provided comprising a base film (2) and a surface film (3), wherein the base film (2) consists of a coagulated polyurethane film and the surface film (3) consists of polyurethane resins coated on the base film (2), the membrane 1 being furthermore preferably used for the coating of furnishing elements (40) and produced by means of a transfer process.

## Description

The present invention concerns a coating membrane for furnishing elements of the type specified in the preamble of the first claim.

Different types of furnishing elements are currently known such as panels, furniture parts, doors and other.

Said furnishing elements are shaped differently and have surfaces that are flat or provided with more or less complex ornamentation and other.

In some cases, the furnishing elements are coated in special varnishes or lacquers or other elements.

In particular some furnishing elements are coated with membranes made of polymeric material, more specifically with polyvinyl chloride or PVC membranes.

Unlike many other polymers, said material has an elasticity sufficient to allow the membranes, made of said material, to adhere to the furnishing element and substantially constitute a robust and aesthetically first-rate coating for said element.

The known technique referred to above has some important drawbacks: the PVC products have serious problem in terms of recycling and disposal due to the potential formation of dioxin or the monomer vinyl chloride which is highly carcinogenic.

In fact, the PVC membranes are toxic, polluting and difficult to dispose of after use.

PVC is furthermore considered a potential carcinogen.

In this situation the technical aim underlying the present invention is to devise a coating membrane for furnishing elements able to substantially remedy the drawbacks cited.

In the context of said technical aim, an important object of the invention is to obtain a coating membrane for furnishing elements without the drawbacks of toxicity and similar.

Another important object of the invention is to devise a coating membrane for furnishing elements which is flexible and adaptable to elements with different shapes and surfaces.

The technical aim and the objects specified are achieved by a coating membrane for furnishing elements as claimed in the attached independent claims. Preferred embodiments are highlighted in the sub-claims.

The characteristics and advantages of the invention are clarified below by the detailed description of a preferred embodiment of the invention, with reference to the accompanying drawings in which:
**Fig. 1** shows a plan of the system suitable for implementing the process of the invention;

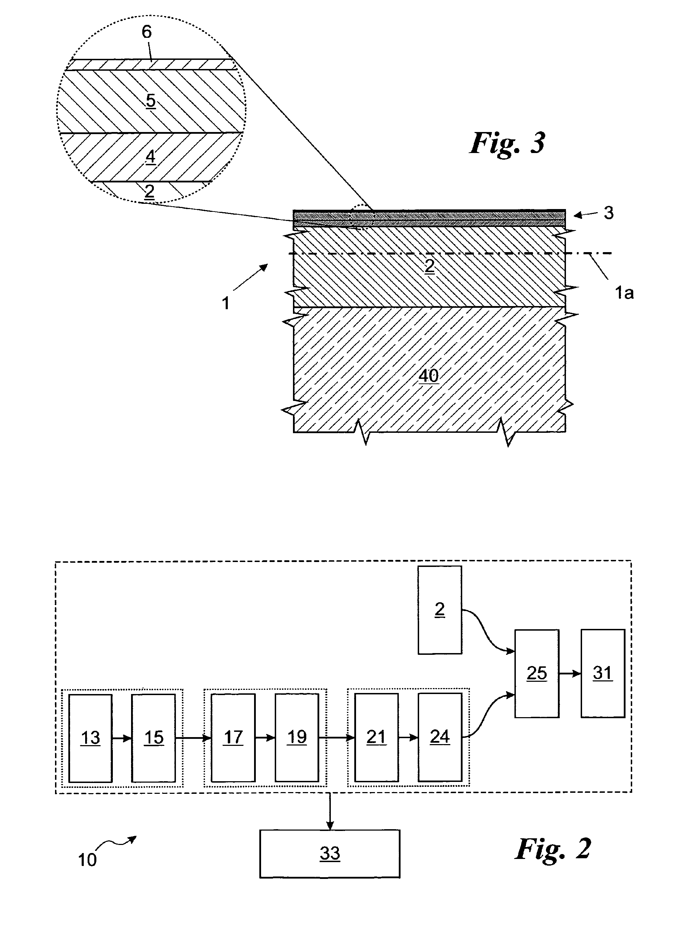

**Fig. 2** illustrates a diagram of the process according to the invention;
**Fig. 3** highlights the cross section of a membrane according to the invention with relative enlargement; and
**Fig. 4** presents a furnishing element including a membrane according to the invention.
   With reference to the figures cited, the coating membrane for furnishing elements and similar according to the invention is globally indicated by the number **1.**

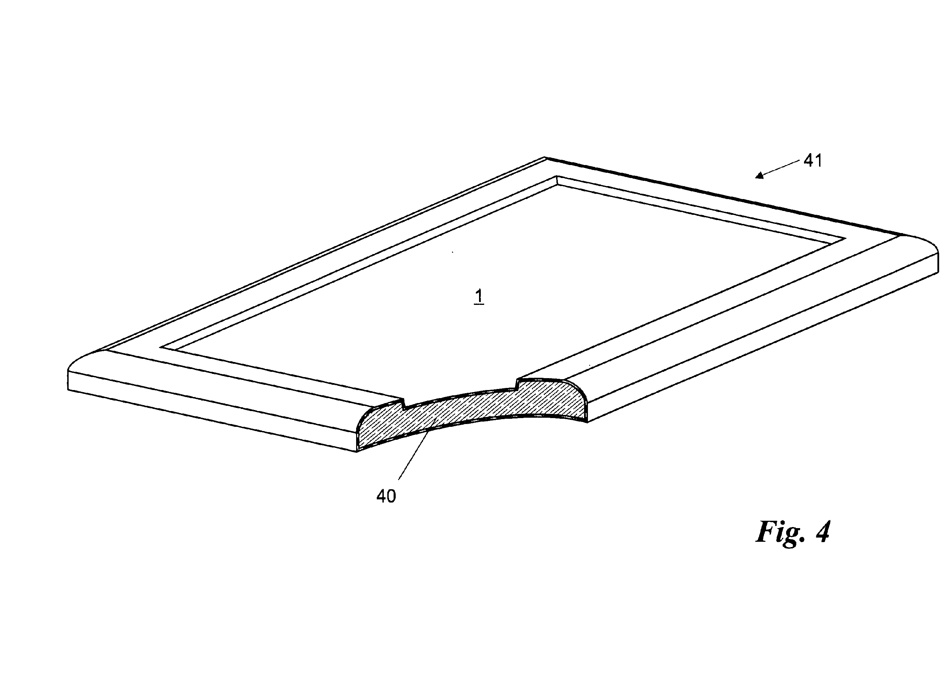

It is suitable for application on furnishing elements **40,** such as panels, furniture parts, doors and similar, and for constituting the coating of said elements 40. The membrane 1 applied to a supporting furnishing element 40 therefore constitutes the outer surface or coating thereof, thus providing as a whole a coated element **41** (Fig. 4).

In detail, the membrane 1 develops mainly over a development surface **1a** and comprises a base film **2** and surface film **3** reciprocally connected.

In particular, the base film 2 consists of a coagulated polyurethane film, having a thickness preferably between 0.2 mm and 0.6 mm and more preferably between 0.3 mm and 0.4 mm. It is furthermore preferably microporous or foamy and has a high elasticity, suitable for permitting the application thereof on particular furnishing elements 40.

The base film 2 is furthermore positioned in contact with the furnishing element 40 and appropriately secured to the same, preferably by gluing.

The surface film 3 also mainly consists of coated polyurethane resins and has a total thickness preferably between 50 µm and 80 µm and a mass of between 30 g/m² and 80 g/m² and more preferably between 50 g/m² and 65 g/m². It is furthermore suitable for constituting the outer surface of the coated element 41 and has a compact structure unlike the base film 2.

The surface film 3 consists preferably of three layers: an adhesive layer **4,** in contact with the base film 2 and suitable for providing the coupling between said base film 2 and the surface film 3, a surface layer **6,** constituting the outer surface opposite the base film 2 of the membrane 1 and the coated element **41,** and an intermediate layer **5,** positioned between the surface layer 6 and adhesive layer 4.

Said layers, adhesive 4, intermediate 5 and surface 6, all consist mainly of polyurethane resins.

In detail, the surface layer 6 comprises a mixture of polyester-based aromatic monocomponent polyurethane resins with good resistance to hydrolysis, light-stabilised and with isocyanic crosslinking to improve the surface resistance. It also has a weight per surface unit preferably between 2 g/m² and 10 g/m² and more preferably between 5 g/m² and 7 g/m².

The intermediate layer 5 comprises a mixture of polyester-based aromatic monocomponent polyurethane resins with medium-high modulus and good resistance to hydrolysis. It has a weight per surface unit preferably between 20 g/m² and 40 g/m² and more preferably between 26 g/m² and 33 g/m².

The adhesive layer 4 comprises a mixture of aromatic monocomponent polyurethane resins, with isocyanic crosslinking, having thermoplastic characteristics. It has a weight per surface unit preferably between 15 g/m² and 30 g/m² and more preferably between 20 g/m² and 24 g/m².

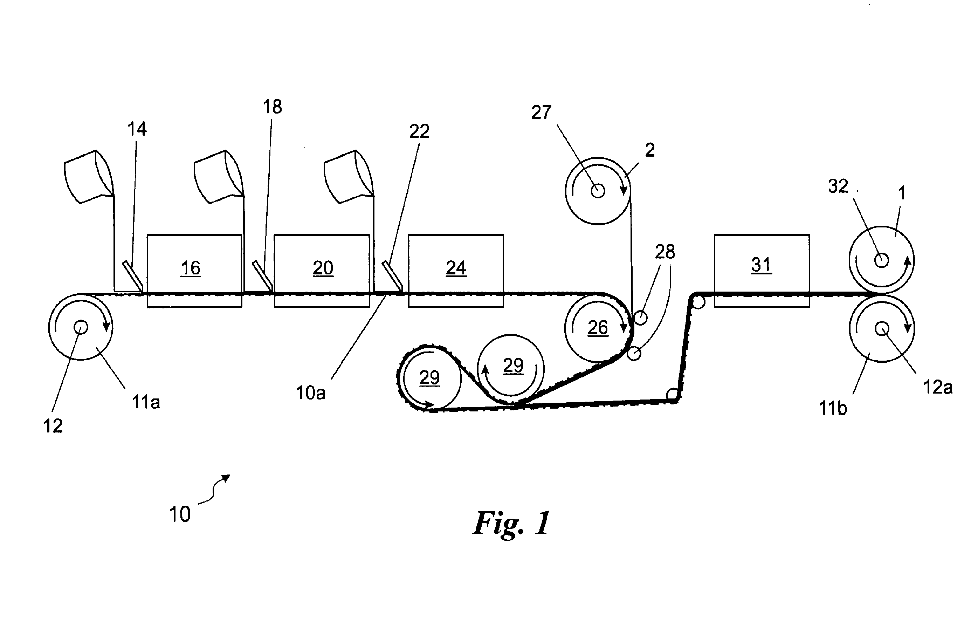

The membrane 1 is produced by means of a process schematically illustrated in Fig. 1 and indicated by the reference number **10.**

The process 10 comprises a transfer process, specified below.

The surface film 3 is consequently initially produced on a transfer paper **11,** known per se and suitable for giving the surface film 3 the desired surface appearance.

The transfer paper 11 is moved along a processing line **10a** and preferably positioned on a horizontal plane.

It is suitably placed in rolls **11a** on a roller **12** and moved in the direction of movement 10a via the unwinding of said rolls by means of a drive roller **12a** which coincides preferably with the roller supporting the roll **11b** of transfer paper 11 at the end of the processing.

In detail, the process 10 comprises a first coating phase **13** of the surface layer 6.

Said first phase 13 comprises coating of the transfer paper 11 a with a polyurethane containing an appropriate solvent.

More specifically, the coating is composed of a mixture of polyester-based aromatic monocomponent polyurethane resins, as previously described, diluted with solvent consisting of DMF (dimethylformamide).

The polyurethanes, or the dry product, are preferably present in percentages of between 25% and 45%, and more preferably between 32% and 38%, with respect to the total mass of the polyurethanes and the solvent.

The coating is performed by devices known per se and by means of at least one first setting blade **14,** positioned near the transfer paper 11 and at a predefined distance therefrom.

The first setting blade 14 is suitable for evenly distributing the polyurethane over the paper 11 and ensuring the required quantities of the same, in particular the quantities suitable for obtaining the weight per surface unit of the surface layer 6 previously described.

The first coating phase 13 of the surface layer 6 is followed by a first drying phase **15** of the same and in particular of the solvent.

The first drying phase 15 is performed preferably in a first oven **16** positioned along the processing line 10a and in such a way as to wind the transfer paper 11 on which the surface layer 6 is positioned along a segment of the processing direction 10a.

Said first oven 16 is preferably brought to a temperature of between 120°C and 140°C. The transfer paper 11 containing the surface layer 6 passes through said oven for a period, preferably, of between 20 s and 60 s and more preferably between 35 s and 45 s.

The solvent of the surface layer 6 evaporates inside the first oven 16 leaving the polyurethane fixed on the transfer paper 11.

The first drying phase 15 is followed by a second coating phase **17,** suitable for producing the intermediate layer 5.

The second coating phase 17 is performed analogously to the first coating phase 13 with a polyurethane containing an appropriate solvent and by means of appropriate devices and a second setting blade **18.**

The intermediate layer 5 is then positioned on the surface layer 6.

In the present case, the coated material, as previously mentioned, is a mixture of polyester-based aromatic monocomponent polyurethane resins.

Also in this case the diluent is preferably DMF and the polyurethanes, or the dry product, are preferably present in percentages of between 25% and 45%, and more preferably between 32% and 38% with respect to the total mass of the polyurethanes and solvent.

Also in this case the second setting blade 18 is suitable for evenly distributing the polyurethane over the surface layer 6 and for ensuring the required quantities thereof, in particular the quantities suitable for obtaining the weight per surface unit of the intermediate layer 5 previously described.

The second coating phase 17 of the intermediate layer 5 is followed by a second drying phase **19** of the solvent.

The second drying phase 19 is performed in a second oven **20,** analogous to the first one but preferably comprising a plurality of sections and in particular three sections.

Said sections are positioned along the processing line 10a and permit diversification of the oven temperature in each section.

In particular the sections have an increasing temperature which starts from a first section with temperature between 100°C and 120°C, a second section with temperature between 120°C and 140°C and a last section with temperature between 130°C and 150°C.

The product passes through said second oven 20 for a period preferably between 70 s and 110 s and more preferably between 85 s and 95 s.

In the second oven 20 the solvent of the intermediate layer 5 evaporates leaving the polyurethane fixed on the surface layer 6 in turn positioned on the transfer paper 11.

A third coating phase **21** is then scheduled, suitable for producing the adhesive layer 4.

The third coating phase 21 is performed analogously to the preceding coating phases 13 and 17, with a polyurethane containing an appropriate solvent and by means of appropriate devices and a third setting blade **22.** The latter is suitable for evenly distributing the polyurethane over the intermediate layer 5 and ensuring the required quantities thereof, in particular the quantities suitable for obtaining the weight per surface unit of the adhesive layer 4 previously described.

The adhesive layer 4 is then positioned on the intermediate layer 5 and comprises a mixture of aromatic monocomponent polyurethane resins, previously described.

The diluent is preferably DMF and the polyurethanes, or the dry product, are preferably present in percentages between 35% and 55%, and more preferably between 42% and 48%, with respect to the total mass of the polyurethanes and the solvent.

The third coating phase 21 is followed by a third drying phase **23** of the solvent. It is performed in a third oven **24,** analogous to the second oven 20, preferably comprising a plurality of sections and in particular two sections.

Appropriately, they have an increasing temperature starting from a section with temperature between 70°C and 90°C and followed by a further section preferably between 120°C and 150°C.

The product passes through said second oven 20 for a period preferably between 70 s and 110 s and more preferably between 85 s and 95 s.

Said temperatures do not cause crosslinking of the adhesive layer 4 because they are not high enough, whereas the intermediate layer 5 and surface layer 6 are preferably crosslinked.

The product passes through the third oven 24 for a period preferably between 70 s and 110 s and more preferably between 85 s and 95 s.

At this point production of the surface film 3, previously described, is complete and it is still connected to the transfer paper 11.

Production of the surface film 3 is followed by a phase of connection **25** of the same with the base film 2, previously described.

The connection phase 25 is appropriately performed by means of a heated cylinder **26,** positioned along the processing line 10a.

In particular the transfer paper 11 is directly in contact with the heated cylinder 26, while the adhesive layer 4 is positioned towards the outside and comes into contact with the base film 2.

The base film 2 is placed, in rolls, on a cylinder **27** positioned in the vicinity of the heated cylinder 26.

The base film 2 is then conveyed onto the surface of the heated cylinder 26 and pressed against the polymeric film 3 by means of pressure rollers **28** positioned substantially tangentially to the heated cylinder.

The heated cylinder 26 is preferably brought to a temperature of between 140°C and 160°C and the surface film 3 passes over it for a period of between 1 s and 20 s and more particularly between 4 s and 8 s.

At said temperature the adhesive layer 4 softens to a semi-fluid state and connects, adhering, to the base film 2 thus producing the membrane 1.

At this point the membrane 1, still coupled to the transfer paper 11, follows a processing line 10a which comprises cooling rollers **29** or similar elements suitable for bringing the membrane 1 to ambient temperature.

If necessary a fourth oven **30** is also provided, suitable for permitting complete crosslinking of the membrane 1.

Said fourth oven 30 can also be omitted and in said case the crosslinking of the membrane 1 is performed without further supply of heat.

The membrane 1 is then ready and is separated, during a separation phase **31,** from the transfer paper 11 and formed into rolls on a roller **32.** The transfer paper 11 is placed on the roller 12a.

The roller 32 is furthermore appropriately the drive roller which permits, together with the roller 12a, movement of the membrane 1 along the processing line 10a.

The membrane 1 is then applied to a furnishing element 40 to constitute the outer surface thereof and to provide a coated element 41.

In particular the furnishing element 40 and membrane 1 are joined during a coupling phase **33,** external to production of the membrane 1.

In the coupling phase 33 the surface of the membrane 1 consisting of the base film 2 is preferably connected to the furnishing element 40, remaining closely adhering to the same, by means of thermo-fixing with appropriate adhesives and by using pressure.

In said way the membrane 1 adheres precisely to the furnishing element 40 producing a coated element 41, the preferred applications of which are furnishing elements such as furniture and similar.

The invention concerns the use of a polyurethane membrane 1, in particular a membrane 1 previously described, for coating furnishing elements 40 intended in particular for furnishing elements and furniture in particular.

The invention offers important advantages.

Unlike the coatings currently used, which are made of PVC, the membrane 1 preferably consists completely of polyurethane and, as known, polyurethane products can be assimilated with solid domestic waste and be very easily disposed of.

Although made of polyurethane, the membrane 1 has the necessary characteristics of elasticity and adaptability such that a three-dimensional application of the product on different and various surfaces of the furnishing elements 40 is possible.

Furthermore the membrane 1 is light-resistant, scratch-resistant, abrasion-resistant and also resistant to common cleaning agents.

The same membrane can furthermore have different colours and surface aspects, determined for example by the surface characteristics of the transfer paper 11.

The invention is subject to variations falling within the scope of the inventive concept. All the details can be substituted by equivalent elements and any materials, forms and dimensions can be used.

## Claims

1. Membrane (1) comprising a base film (2) and a surface film (3), **characterised in that** said base film (2) consists of a coagulated polyurethane film and said surface film (3) consists of polyurethane resins coated on said base film (2).

2. Membrane (1) as claimed in claim 1, wherein said base film (2) is microporous.

3. Membrane (1) as claimed in one or more of the preceding claims, wherein said base film (2) has a thickness preferably between 0.2 mm and 0.6 mm.

4. Membrane (1) as claimed in one or more of the preceding claims, wherein said surface film (3) is compact and has a total thickness preferably between 50 µm and 80 µm.

5. Membrane (1) as claimed in one or more of the preceding claims, wherein said surface film (3) comprises at least one adhesive layer (4), in contact with said base film (2) and suitable for providing the connection between said base film (2) and said surface film (3), a surface layer (6), constituting the outer surface of said membrane (1), opposite said base film (2), and an intermediate layer (5) positioned between said surface layer (6) and adhesive layer (4).

6. Membrane (1) as claimed in claim 5, wherein said surface layer (6) comprises a mixture of polyester-based aromatic monocomponent polyurethane resins having a weight per surface unit of between 2 g/m² and 10 g/m².

7. Membrane (1) as claimed in one or more of the claims 5-6, wherein said intermediate layer (5) comprises a mixture of polyester-based aromatic monocomponent polyurethane resins having a weight per surface unit of between 20 g/m² and 40 g/m².

8. Membrane (1) as claimed in one or more of the claims 5-7, wherein said adhesive layer (4) comprises a mixture of aromatic monocomponent polyurethane resins with isocyanic crosslinking having thermoplastic characteristics, with a weight per surface unit of between 15 g/m² and 30 g/m².

9. Coated element (41) comprising a supporting furnishing element (40) and a coating membrane (1) as claimed in one or more of the preceding claims.

10. Process (10) for producing a membrane (1) as claimed in one or more of the claims 1-8, comprising the coating of a surface film (3) on a transfer paper (11), the coupling (25) of said surface film (3) with a base film (2) for the production of said membrane (1) and the separation of said membrane (1) and said transfer paper (11), **characterised in that** said coating is performed in consecutive phases and comprises at least one first coating phase (13), one second coating phase (17) and one third coating phase (21).

11. Process (10) as claimed in claim 9, wherein in said coating phases (13, 17, 21) said polymers are coated with solvent and wherein said coating phases (13, 17, 21) are followed by drying phases (15, 19, 24) suitable for permitting the evaporation of said solvent.

12. Process (10) as claimed in claim 11, wherein said solvent is DMF.

13. Process (10) as claimed in one or more of the claims 10-12, wherein said coupling (25) is performed by means of a heated cylinder (26) directly in contact with said transfer paper (11).

14. Use of a polyurethane membrane (1) for the coating of furnishing elements (40).

15. Use as claimed in claim 14, wherein said membrane (1) is joined to said furnishing element (40) by means of pressure gluing.
